# DEMANDE DE BREVET EUROPEEN

(11) **EP 1 496 320 A1**
(43) Date de publication de la demande: **12.01.2005**
(21) Numéro de dépôt: 03447181.3
(22) Date de dépôt: 08.07.2003
(51) Int. Cl.: F24J 2/51, F24J 2/26

(54) **Capteur thermique solaire plan de faible épaisseur**

(71) Demandeur: R & D du groupe Cockerill-Sambre, 4000 Liège (BE)
(72) Inventeur: Kergen, Richard, 4347 Fexhe-Le-Haut-Clocher (BE); Dehbi, Leila, 1160 Auderghem (BE); Descy, G.G., 5580 Rochefort (BE)
(74) Mandataire: Van Malderen, Joelle

(57) **Abrégé**

La présente invention se rapporte à un capteur thermique solaire plan comprenant un bac structurel en métal (1) fermé hermétiquement sur sa face avant par une feuille de couverture en un matériau essentiellement transparent au rayonnement solaire (4), de manière à former une boîte, ladite boîte comprenant successivement, en partant de la face avant, une lame d'air (6) à la pression atmosphérique, un absorbeur de rayonnement (2), de préférence sous forme de feuille, une pluralité de conduites (3) pour le passage de fluide caloporteur et un matériau isolant arrière, caractérisé en ce que ledit matériau isolant (7) est un panneau isolant sous vide (PIV).

## Description

### Objet de l'invention

La présente invention se rapporte à un nouveau type de capteur thermique solaire plan présentant une faible épaisseur de couche isolante tout en conservant une isolation globale comparable aux capteurs solaires utilisant des isolants classiques tels que laine minérale ou mousse synthétique.

### Etat de la technique

Le développement de capteurs thermiques solaires plans suscite actuellement un intérêt croissant dans le secteur du bâtiment (chauffage d'habitations), dans le cadre de la recherche de solutions en vue de réduire les émanations de dioxyde de carbone dans l'atmosphère.

On connaît des capteurs ou collecteurs thermiques solaires plans de type "TST" (*tuile solaire thermique* ; en anglais : "STT", *solar thermal tile*). Ceux-ci incorporent des isolants thermiques en vue de réduire les pertes thermiques par conduction, convexion et rayonnement, selon des mécanismes bien connus.

Les pertes de chaleur par conduction et convexion peuvent être réduites en évacuant l'air du collecteur, dans l'espace délimité entre l'élément absorbeur et les parois.

Généralement, les collecteurs de type "boîte" sont très épais suite à la quantité d'isolant thermique nécessaire pour leur conférer une efficacité suffisante, par réduction des pertes thermiques au niveau des parois non actives. Ces isolants thermiques sont constitués par exemple de laine minérale, d'aérogel ou de mousse à cellules fermées constituées de matière plastique et sont en outre munis de revêtements externes en feuillards d'aluminium utilisés comme réflecteurs de rayonnement thermique (voir par exemple JP-A-09 217 961, JP-A-09 287 832, WO-A-93 05 348).

Cette épaisseur importante rend les capteurs solaires connus volumineux et donc encombrants pour les habitations, sans compter leur manque d'esthétique lorsqu'ils sont apposés sur la toiture ou encore la perte d'isolation par création de ponts thermiques lorsqu'ils sont intégrés dans la toiture.

On connaît par ailleurs un grand nombre de collecteurs sous vide. Dans le cas d'un collecteur plan vitré sous vide, il est difficile techniquement de réaliser des vitres de surface suffisante, d'une seule pièce, qui reprennent les charges liées à la pression atmosphérique et ce, d'autant plus que le collecteur doit rester le plus léger et le moins épais possible pour pouvoir être intégré facilement dans des éléments de construction tel qu'un toit par exemple. Des solutions à ce problème ont été trouvées telles que collecteur cylindrique, pluralité de collecteurs tubulaires, collecteur plan avec surface extérieure constituée d'un ensemble de tubes en verre sous vide, utilisation de supports intermédiaires de soutien de la vitre, vitre de forme adaptée pour résister à la charge, etc. (voir par exemple US-A-6 119 683, JP-A-04 359 754, DE-A-19 742 066, US-A-4 686 961, US-A-4 423 718, GB-A-2 089 024, US-A-4 289 113, US-A-4 186 723, US-A-4 184 480, US-A-4 141 185, US-A-4 091 793).

On constate également des problèmes de jonction liés à la nécessité de rendre le collecteur hermétique. Il en résulte la difficulté de créer et maintenir un vide poussé dans ce type de collecteur. On se contente dès lors généralement d'un vide partiel avec régénération régulière par l'utilisation d'une pompe à vide reliée à l'installation.

La demande de brevet EP-A-1 176 371 décrit un collecteur thermique plan, superisolé globalement et constitué d'un panneau PIV comprenant respectivement, par mise en sandwich entre une feuille avant transparente et une feuille arrière, un aérogel granulaire, un absorbeur, des conduites pour le passage d'eau et un matériau isolant thermique ordinaire. L'ensemble est scellé hermétiquement. Le panneau est structurellement rigidifié par la mise sous vide peu poussé (quelques mbar de pression résiduelle), ce qui confère également au panneau un coefficient de conductibilité thermique réduit à environ 5 mW/m.K.

### Buts de l'invention

La présente invention vise à fournir une solution qui permette de s'affranchir des inconvénients présentés par l'état de la technique.

En particulier, l'invention a pour but de proposer un capteur thermique solaire plan équipé d'une couche isolante d'épaisseur fortement réduite.

L'invention a encore pour but de proposer un capteur solaire plan qui ne requiert pas une mise sous vide permanente ou renouvelée.

### Principaux éléments caractéristiques de l'invention

Un premier objet de la présente invention concerne un capteur thermique solaire plan comprenant un bac structurel en métal fermé hermétiquement sur sa face avant par une feuille de couverture en un matériau essentiellement transparent au rayonnement solaire, de manière à former une boîte, ladite boîte comprenant successivement, en partant de la face avant, une lame d'air à la pression atmosphérique, un absorbeur de rayonnement, de préférence sous forme de feuille, une pluralité de conduites pour le passage de fluide caloporteur et un matériau isolant arrière, caractérisé en ce que ledit matériau isolant est un panneau isolant sous vide (PIV).

Selon l'invention, le panneau de type PIV est constitué d'une enceinte scellée sous vide contenant un matériau microporeux à base de silice précipitée ou de fibre de verre, un matériau de type mousse à cellules ouvertes ou un aérogel.

De manière avantageuse, l'enceinte scellée sous vide comprend deux feuilles de métal extérieures, de préférence en acier inoxydable, scellées sous vide sur leur périphérie par un moyen de scellement tel que collage, soudage ou sertissage.

De préférence, ladite enceinte est recouverte d'un film protecteur extérieur anti-infrarouge.

Avantageusement, la pression régnant à l'intérieur du panneau de type PIV est inférieure à 5 mbar, de préférence inférieure à 2 mbar et le coefficient de conductibilité thermique dudit panneau est inférieur à 6 mW/m.K.

Toujours selon l'invention, les côtés latéraux du capteur comprennent également des éléments en matériau isolant, de préférence de type PIV.

Selon une forme d'exécution particulière de l'invention, l'isolation de la face arrière et des côtés latéraux dudit capteur est réalisée par un seul élément isolant de type PIV, de forme adaptée au bac structurel.

Selon encore une modalité préférentielle de réalisation, la feuille de couverture transparente présente un coefficient de transmission du spectre solaire supérieur à 90% et comprend du verre, du polycarbonate ou du PMMA.

De préférence, l'absorbeur présente un coefficient d'absorption supérieur à 90% et une émissivité infrarouge inférieure à 8%.

Encore de préférence, la lame d'air a une épaisseur d'au moins 20 mm.

Il ressort avantageusement de l'invention que le capteur thermique a une hauteur totale inférieure à 70 mm, de préférence à 50 mm.

De manière avantageuse, le bac structurel est réalisé en acier par pliage, emboutissage ou profilage.

Un deuxième objet de la présente invention concerne l'utilisation d'un capteur thermique solaire plan, tel que décrit précédemment, comme élément extérieur de toiture ou mural pour la récupération de chaleur dans un bâtiment au moyen de fluide caloporteur, de préférence une maison d'habitation.

### Brève description des figures

La figure 1 représente schématiquement un capteur thermique solaire plan avec isolant selon l'état de la technique.

Les figures 2.a et 2.b représentent schématiquement un capteur thermique solaire plan avec isolant de type PIV selon deux formes d'exécution préférées de la présente invention.

La figure 3 représente graphiquement l'évolution du flux énergétique entrant / sortant d'un capteur solaire plan selon l'état de la technique en fonction de l'épaisseur de laine minérale et en comparaison avec une épaisseur fixe d'isolant VIP selon l'invention.

### Description d'une forme d'exécution préférée de l'invention

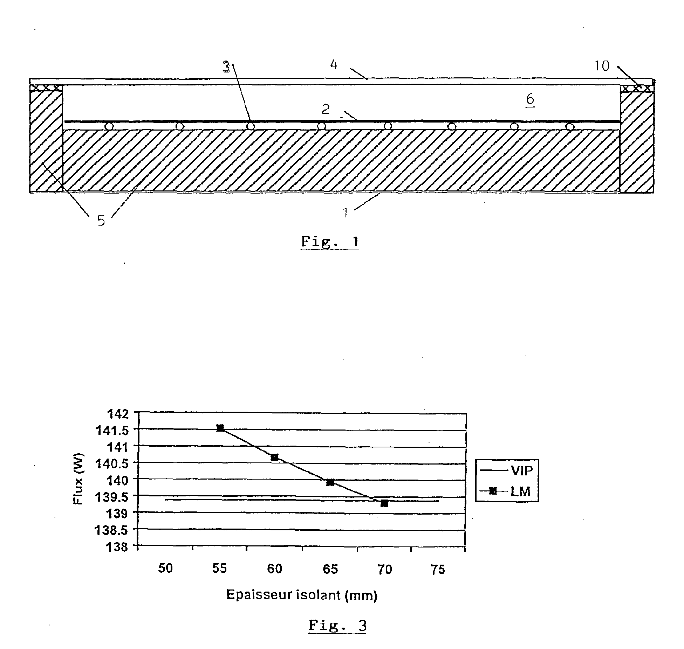

Comme représenté schématiquement à la figure 1, un capteur thermique solaire plan de type TST se compose d'un bac structurel 1, d'un élément absorbeur 2, de conduites 3 pour le passage d'un fluide caloporteur devant être chauffé, tel que de l'eau, d'une couverture transparente au rayonnement solaire (UV, visible et IR) 4, ainsi que d'éléments isolants thermiques latéraux et arrière 5 en vue de réduire les pertes thermiques au niveau des côtés non actifs du capteur.

Le bac 1 est en métal, par exemple en acier, mis en forme par une technique telle que le pliage, l'emboutissage ou le profilage. La lame d'air 6 a typiquement une épaisseur de 20 mm.

Le matériau absorbeur 2 avant transformation se présente sous la forme de feuilles de longueur allant jusqu'à plusieurs mètres et présente par exemple un coefficient d'absorption a = 95% et un coefficient d'émission e = 5%.

De préférence, l'élément de couverture 4 est une feuille de verre, par exemple de 3 mm d'épaisseur présentant une faible réflexion et donc une transmission très élevée du spectre solaire (par exemple τ = 96%), reposant sur le bac structurel 1 au moyen d'un joint d'étanchéité 10, par exemple de type EPDM.

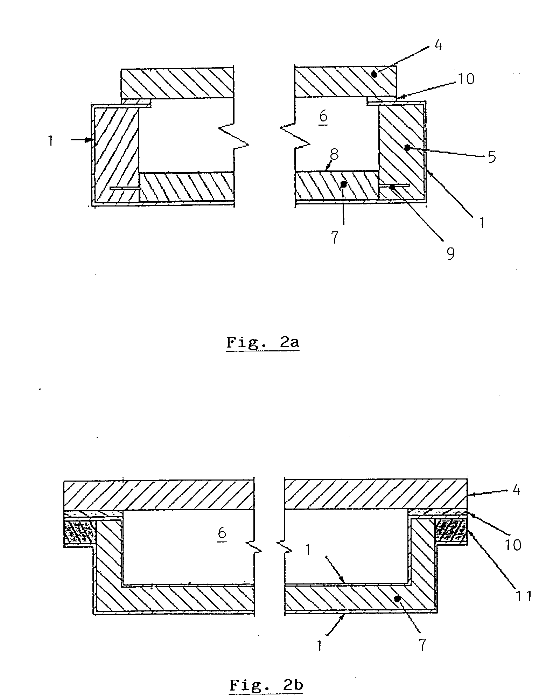

Les figures 2.a et 2.b présentent une vue en coupe transversale d'un capteur thermique solaire plan respectivement selon deux formes d'exécution préférées de l'invention. Pour des raisons de clarté du dessin, l'absorbeur 2 et les conduites 3 ont été omises.

L'originalité du produit proposé par la présente invention réside dans l'utilisation, au moins comme isolant arrière 7 (voir Fig. 2.a et 2.b) d'un capteur thermique solaire plan, de panneaux isolants sous vide "PIV" (en anglais : "VIP", *vacuum insulated panel),* permettant de réduire fortement l'épaisseur des couches isolantes tout en gardant des valeurs d'isolation semblables à celles des isolants thermiques de l'état de la technique.

Dans la Fig. 2.a, le panneau isolant PIV utilisé aux fins de l'invention est composé d'une enveloppe étanche comprenant deux feuilles d'acier inoxydable 8 scellées sur leur périphérie 9 par tout moyen connu tel que collage, soudage, sertissage, par exemple, sans que ces techniques soient limitatives dans le cadre de la présente invention. Cette enveloppe étanche réalise une barrière durable à la diffusion de l'air atmosphérique à l'intérieur de l'enceinte de ce panneau. La nature de cette barrière a également été choisie de manière telle qu'elle supporte sans altération les niveaux de température habituellement atteints dans les capteurs solaires plans (maximum 200 °C). Dans l'enceinte délimitée par ledit panneau, on utilise un matériau qui supporte les contraintes de compression et qui réalise des cellules ouvertes dans lesquelles le libre parcours moyen des molécules d'air, dont la pression est réduite à l'ordre de grandeur du mbar, est compris dans les dimensions de l'enceinte. On notera que l'isolation latérale 5 reste constituée de laine minérale ou d'un isolant résistant aux températures élevées.

Dans la Fig. 2.b, le panneau isolant PIV comprend une enveloppe étanche en acier, réalisée à même le bac structurel en acier 1, le scellement dudit panneau sous vide peu poussé étant assuré par un joint d'étanchéité en silicone 11 par exemple.

Selon une modalité d'exécution préférée de l'invention, le panneau isolant PIV est obtenu par scellement sous vide d'une enceinte constituée de feuilles d'inox contenant à coeur un matériau réalisant la structure, par exemple un matériau microporeux à base d'un mélange de silice amorphe précipitée ou de fibre de verre ou encore un aérogel. On utilisera par exemple l'isolant thermique microporeux Wacker WDS® disponible commercialement (Wacker-Chemie GmbH, Muenchen, Deutschland).

Alternativement, le scellement peut être d'abord réalisé par collage ou soudure et la mise sous vide réalisée ensuite par une installation comprenant une petite pompe, un filtre dessicatif et un getter pour le contrôle de la pression. Si nécessaire, le panneau PIV peut encore être muni d'un film protecteur extérieur anti-infrarouge.

De manière particulièrement avantageuse, le panneau PIV plan peut être remplacé par un élément de forme adaptée à celle du bac structurel en acier, donc reprenant également l'isolation des côtés du capteur, de manière à supprimer ou réduire les ponts thermiques résultant de la juxtaposition des matériaux et/ou isolants dans les capteurs solaires de l'état de la technique (voir Fig. 2.b).

La pression de l'air dans le panneau est ramenée à l'ordre de grandeur du mbar. Ledit matériau est également choisi pour présenter une conductibilité thermique intrinsèque faible. Ainsi le panneau sous vide peu poussé (1 mbar) a une valeur de coefficient de conductibilité thermique λ de l'ordre de 5 à 6 mW/m.K, ce qui est pratiquement 6 x moindre que pour un matériau isolant classique (laine minérale : λ = 35 mW/m.K).

A titre d'exemple, une modélisation a été réalisée pour un capteur solaire plan présentant une surface de 0,29 m² (voir figure 3). Un flux total (entrant / sortant) de l'ordre de 140 W est obtenu avec un panneau isolant de type PIV présentant une épaisseur de 15 mm. Un flux total équivalent est obtenu avec un isolant classique en laine minérale présentant une épaisseur de 70 mm. Il en résulte une hauteur totale de 50 mm dans le cas du capteur "VIP" et de 105 mm dans le cas du capteur selon l'état de la technique.

Ainsi, comme les isolants arrière de capteur solaire ont généralement des épaisseurs de 50 à 60 mm, l'utilisation d'un panneau isolant sous vide (PIV) permet donc de réduire cette épaisseur jusqu'à une valeur typique de l'ordre de 10 mm. Un capteur solaire classique complet mesure entre 80 et 110 mm d'épaisseur. Une réduction de l'ordre de 50 mm peut donc être considérée comme très significative et avantageuse.

Les cotes réelles en mm pour les réalisations données en exemple dans les figures 2.a et 2.b sont :
- épaisseur totale du capteur solaire : 45 mm ;
- côté du capteur solaire : 600 mm ;
- feuille de verre : 10 mm ;
- panneau "PIV" : 10 mm ;
- laine minérale : 15 mm (uniquement Fig.2.a) ;
- lame d'air : 25 mm.
afin de permettre au lecteur de se représenter les dimensions des capteurs solaires de l'invention.

Des essais comparatifs ont été effectués pour des isolants de type "PIV" et de type classique (laine minérale, désigné ci-après par LM) intégrés dans un capteur solaire disposé à des inclinaisons respectives de 15, 45 et 90°. Trois périodes de 5 jours ont été considérées : du 20 au 25 juillet, du 21 au 26 décembre et du 21 au 26 avril. Les données climatiques ont été fournies par l'Institut Royal Météorologique (Uccle, Belgique). Les épaisseurs des isolants sont telles que mentionnées ci-dessus (15 mm pour PIV et LM respectivement). Les résultats obtenus sont consignés dans le Tableau 1. Dans chaque cas, on a indiqué la température extérieure maximale (T ext,max) et moyenne (T ext,moy) du jour considéré, ainsi que la température intérieure dans le capteur plan, maximale (T int,max) et moyenne (T int,moy) et enfin le flux thermique total entrant ou sortant, maximal (Q tot,max) et moyen (Q tot,moy).

Les avantages du produit de l'invention sont donc :
- plus. de nécessité de maintenir un vide permanent ou de renouveler le vide dans le capteur, d'où réduction de coût ;
- intégration architecturale plus aisée ;
- en particulier intégration aisée en toiture avec maintien de la fonction d'étanchéité de celle-ci ;
- diminution de la quantité des matériaux pour la fabrication due à la faible épaisseur du capteur ;
- plus de nécessité d'avoir une enveloppe hermétique parfaite, du fait que seul le panneau "PIV" est sous vide et non l'ensemble du capteur ;
- réduction des ponts thermiques aux jonctions de matériaux ;
- réduction des coûts de transport vu la diminution de 30 à 50% du volume à transporter ;
- facilité accrue de manutention en production et sur site de montage (y compris fixation).

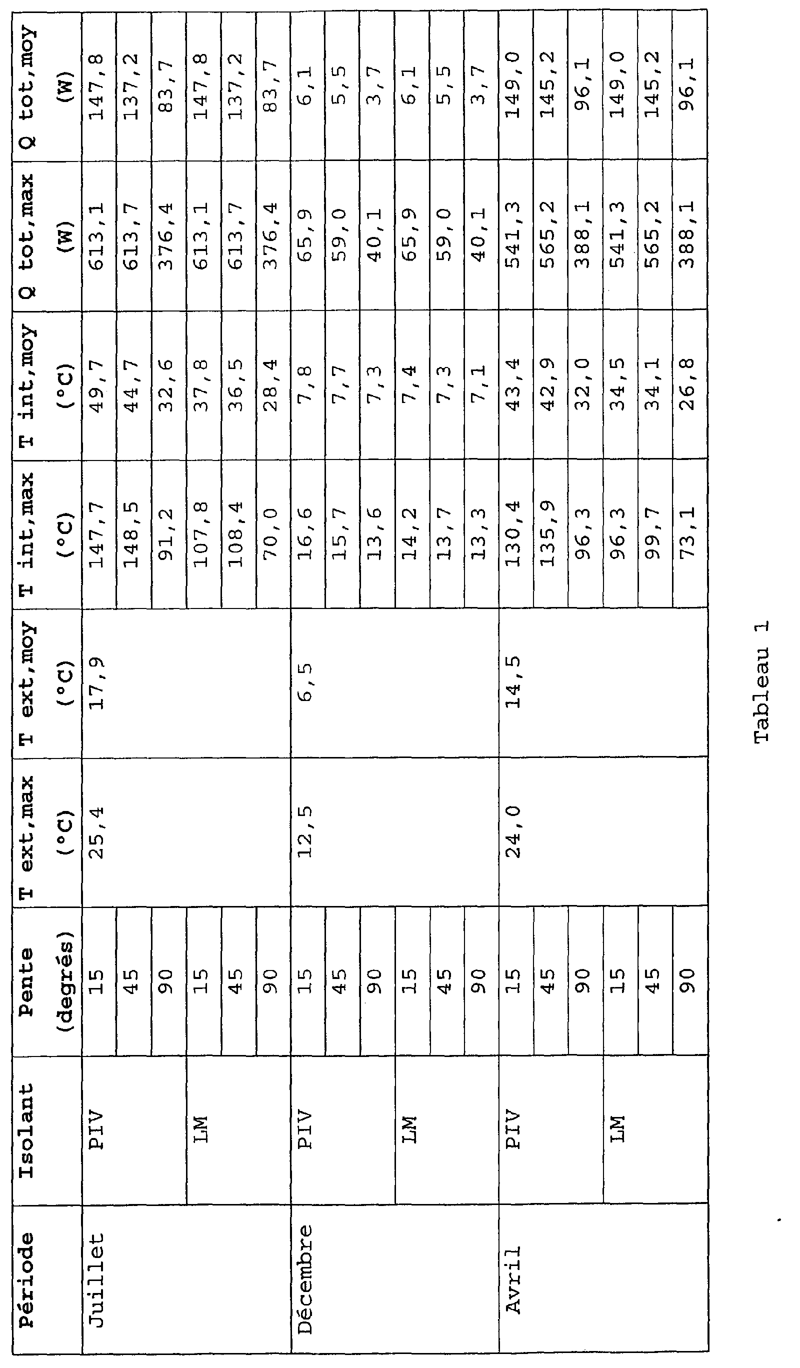

## Revendications

1. Capteur thermique solaire plan comprenant un bac structurel en métal (1) fermé hermétiquement sur sa face avant par une feuille de couverture en un matériau essentiellement transparent au rayonnement solaire (4), de manière à former une boîte, ladite boîte comprenant successivement, en partant de la face avant, une lame d'air (6) à la pression atmosphérique, un absorbeur de rayonnement (2), de préférence sous forme de feuille, une pluralité de conduites (3) pour le passage de fluide caloporteur et un matériau isolant arrière, **caractérisé en ce que** ledit matériau isolant (7) est un panneau isolant sous vide (PIV).

2. Capteur thermique selon la revendication 1, **caractérisé en ce que** le panneau de type PIV (7) est constitué d'une enceinte scellée sous vide contenant un matériau microporeux à base de silice précipitée ou de fibre de verre, un matériau de type mousse à cellules ouvertes ou un aérogel.

3. Capteur thermique selon la revendication 1 ou 2, **caractérisé en ce que** l'enceinte scellée sous vide comprend deux feuilles de métal extérieures, de préférence en acier inoxydable, scellées sous vide sur leur périphérie par un moyen de scellement tel que collage, soudage ou sertissage.

4. Capteur thermique selon la revendication 2 ou 3, **caractérisé en ce que** ladite enceinte est recouverte d'un film protecteur extérieur anti-infrarouge.

5. Capteur thermique selon l'une quelconque des revendications 1 à 4, **caractérisé en ce que** la pression régnant à l'intérieur du panneau de type PIV est inférieure à 5 mbar, de préférence inférieure à 2 mbar et **en ce que** le coefficient de conductibilité thermique dudit panneau est inférieur à 6 mW/m.K.

6. Capteur thermique selon l'une quelconque des revendications précédentes, **caractérisé en ce que** les côtés latéraux du capteur comprennent également des éléments en matériau isolant, de préférence de type PIV (5,7).

7. Capteur thermique selon l'une quelconque des revendications précédentes, **caractérisé en ce que** l'isolation de la face arrière et des côtés latéraux dudit capteur est réalisée par un seul élément isolant de type PIV, de forme adaptée au bac structurel (1).

8. Capteur thermique selon l'une quelconque des revendications précédentes, **caractérisé en ce que** la feuille de couverture transparente (4) présente un coefficient de transmission du spectre solaire supérieur à 90%.

9. Capteur thermique selon la revendication 8, **caractérisé en ce que** la feuille de couverture transparente (4) comprend du verre, du polycarbonate ou du PMMA.

10. Capteur thermique selon l'une quelconque des revendications précédentes, **caractérisé en ce que** l'absorbeur (2) présente un coefficient d'absorption supérieur à 90% et une émissivité infrarouge inférieure à 8%.

11. Capteur thermique selon l'une quelconque des revendications précédentes, **caractérisé en ce que** la lame d'air (6) a une épaisseur d'au moins 20 mm.

12. Capteur thermique selon l'une quelconque des revendications précédentes, **caractérisé en ce qu'**il a une hauteur totale inférieure à 70 mm, de préférence à 50 mm.

13. Capteur thermique selon l'une quelconque des revendications précédentes, **caractérisé en ce que** le bac structurel (1) est réalisé en acier par pliage, emboutissage ou profilage.

14. Utilisation d'un capteur thermique solaire plan, selon l'une quelconque des revendications précédentes, comme élément extérieur de toiture ou mural pour la récupération de chaleur dans un bâtiment au moyen d'un fluide caloporteur, de préférence une maison d'habitation.
